# EUROPEAN PATENT APPLICATION

(11) **EP 1 995 903 A1**
(43) Date of publication of application: **26.11.2008**
(21) Application number: 07252115.6
(22) Date of filing: 23.05.2007
(51) Int. Cl.: H04L 1/16

(54) **Communication system**

(71) Applicant: British Telecommunications Public Limited Company, London EC1A 7AJ (GB)
(72) Inventor: The designation of the inventor has not yet been filed
(74) Representative: Chabasseur, Vincent Robert

(57) **Abstract**

The present invention relates to a method of communication between a central station that transmits downstream data units in a downstream direction and a remote station that transmits upstream data units in an upstream direction such that the upstream and downstream data units are transmitted in synchronism with one another, including the steps of:(i) receiving at the central station an acknowledgement message residing in an upstream data unit, which acknowledgement message relates to a downstream data unit previously transmitted from the central station; and,(ii) on the basis of the temporal position of the upstream data unit in which the acknowledgement message resides, making an inference as to which of the transmitted downstream data units the acknowledgement message relates. Because the identity of the downstream frame is inferred on the basis of the temporal position of the upstream data unit in which the acknowledgement message resides, the need for the acknowledgement message to itself contain an indication of the identity of said downstream frame is reduced. As a result, the acknowledgement message consumes only a small bandwidth.

## Description

The present invention relates to a method of communication, in particular to a method of communication in which an acknowledgement message is sent.

It is known for data to be lost due to noise along a transmission link. Retransmission protocols are known but these can consume significant bandwidth.

According to one aspect of the present invention, there is provided a method of communicating data between a central station that transmits downstream data units in a downstream direction and a remote station that transmits upstream data units in an upstream direction such that the upstream and downstream data units are transmitted in synchronism with one another, including the steps of:(i) receiving at the central station an acknowledgement message residing in an upstream data unit, which acknowledgement message relates to a downstream data unit previously transmitted from the central station; and,(ii) on the basis of the temporal position of the upstream data unit in which the acknowledgement message resides, making an inference as to which of the transmitted downstream data units the acknowledgement message relates.

Because the identity of the downstream frame is inferred on the basis of the temporal position of the upstream data unit in which the acknowledgement message resides, the need for the acknowledgement message to itself contain an indication of the identity of said downstream frame is reduced. As a result, the acknowledgement message consumes only a small bandwidth.

The temporal position of the upstream data unit in which the acknowledgement message resides may be determined by monitoring the arrival time of the data unit or a marker therein. However, a counter may be provided such that the temporal position of the upstream data unit in a signal stream can be determined by counting the received upstream data units at the central station.

Preferably, each of the central and remote stations will be arranged to transmit data units carrying user data, and overhead units that do not carry user data, the overhead units containing synchronisation information or other overhead information for the maintenance of communication. The central and remote stations will preferably each transmit the same number of data units in a given time interval, so that a one-to-one mapping can be made between the data units in the upstream direction on the one hand and those in the downstream direction on the other hand.

Preferably, each the of the upstream overhead units is free of an acknowledgement message. In this situation, only the data units carry an acknowledgement message in the upstream direction. Preferably, the number of data units transmitted in the upstream and downstream directions will be the same in a given time interval, so that there is one downstream data unit for each upstream data unit. If a counter is employed, the counter can then simply be incremented each time a user unit is received at the central station, it being inferred that the order in which the acknowledgement messages are sent reflects the order in which the downstream data units are transmitted. However, the remote station need not send acknowledgement messages in same order as that in which the downstream data units are received at the remote station, but rather in a different order, provided that the remote station informs the central station of the different order.

In a preferred embodiment, the data units and overhead units are each formed as a respective frame.

The remote station is preferably arranged to carry out a loss detection procedure in respect of a received data unit to determine whether the data unit has been subjected to loss, the acknowledgement message being indicative of whether such loss has been determined. Clearly, the loss may be determined if a data unit is not received at the remote station, for example if that data unit has been completely destroyed.

The acknowledgement message is preferably formed as a two state indicator. The states may be "1" and "0", the "0" state being simply the absence of a pulse. Although the two state indicator may be a sequence of bits or pulses having the same value, the two state indicator will preferably have a single bit, making it easier to be included in a frame.

The acknowledgement message may itself be lost in transmission. Accordingly, the central station may also carry out a loss detection procedure, and treat a lost acknowledgement as if it indicated loss of a downstream data unit, the identity of the downstream data unit being inferred on the basis of the temporal position of the upstream data unit containing the lost acknowledgement, or on the basis of the temporal position of the upstream data unit which would have contained the acknowledgement had that data unit not been lost.

Preferably, a plurality of frequency channels will be provided for transmitting the data along a twisted pair of electrical conductors, the inverse of frequency spacing between channels defining a fundamental period, the data units being modulated as symbols having a temporal length equal to (1+1/16^{th}) of the fundamental period. The modulation state of the carriers is preferably constant throughout a symbol duration.

According to another aspect of the present invention, there is provided a method of communicating data between a central station that transmits downstream data units in a downstream direction and a remote station that transmits upstream data units in an upstream direction, including the steps of:(i) receiving at the central station an acknowledgement message residing in an upstream data unit, which acknowledgement message relates to a downstream data unit previously transmitted from the central station; and,(ii) identifying the data unit in relation to which the acknowledgement message was sent on the basis of the time at which the acknowledgement message is received.

The time at which the acknowledgement message is received may be the time at which the actual message is received, or a time at which a temporally offset marker is received, such as a marker at a predetermined position within a data unit. Preferably, time is measured in temporal units equal to the temporal length of the data units.

The terms upstream and downstream will be understood to refer to topological directions relative to the central and remote stations. The central station may but need not have further remote stations connected thereto, for example by respective twisted pairs of electrical conductors. Cleary, the roles of the central and remote stations may be interchanges.

The invention will now be described, by way of example, and with reference to the following drawings in which:
Figure 1 shows schematically a communication system according to the present invention;
Figure 2 is a flow chart showing the steps involved in communication.

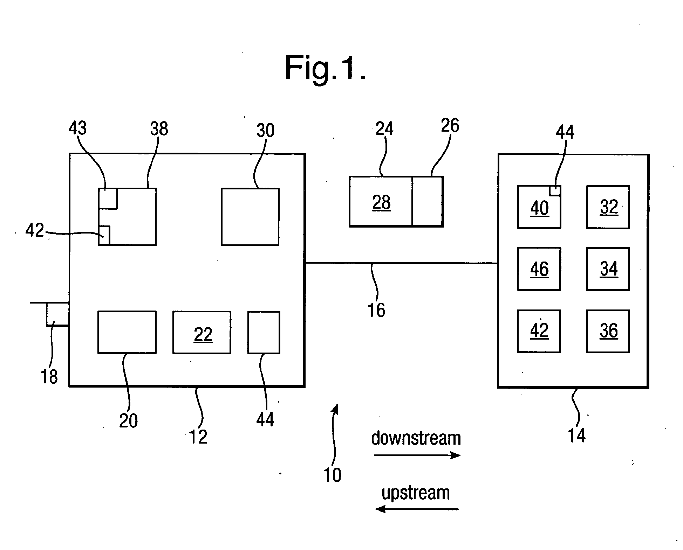

Figure 1 shows a communication system 10 which includes a central station 12 and a remote station 14 connected by a link 16, the link being formed over at least part of its length by a twisted pair of electrical conductors. Twisted pairs are found in existing telephone networks but are not well suited for high data rates (e.g., rates of about 0.5 Mbps-BMbps) because at such rates attenuation can be very high. In order to allow for more efficient transmission over a twisted pair, the signal to be transmitted is suitably modulated using a DSL technique.

In DSL or broadband communication, information is transmitted over a plurality of frequency channels, or tones, each of which is individually modulated according to a scheme known as Discrete Multi Tone modulation (DMT). The number of channels employed will depend on the particular scheme used, but the number is normally at least 100, for example around 150. Each channel has a plurality of modulation states, the state of the channel in a given time interval (referred to herein as the symbol period) being representative of information transmitted. The channels have a regular separation in the frequency domain, in this example 4 kHz.

The number of modulation states that a channel can take is set in dependence on the particular amount of distortion, attenuation, or other losses to which that channel is subjected. That is, a channel with little loss would be allocated more states than a channel with a high loss. As the losses will be different for the different channels, and will be different for different twisted pair links, the central station and the remote station are arranged to carry out a training routine when the system is initialised, in which routine the channels are tested and the loss in each channel is measured. In order to test the channels, the central station transmits a wide-band test pulse which encompasses each of the channels. The remote station monitors various attributes of the test pulse received over the channels, and reports these results back to the central station, which uses the reported attributes to determine the extent and the nature of the losses and to set the number of states allocated to each channel in accordance with the determined losses. As part of the training routine, the central station may transmit a message instructing the remote station to respond after a predetermined delay, so that a measure of the round trip time to and from the central station can be obtained.

The channels can be modulated according to one of a number of different schemes, such as amplitude shift keying, frequency shift keying, or phase shift keying. In the present example, Quadrature Amplitude Modulation (QAM) is used.

Considering first an individual channel: this takes the form of a sinusoidal carrier which will, in a given time interval, have a given phase offset and amplitude. The possible states of phase offset and amplitude which the carrier can take can be represented in two dimensions as a so-called "constellation". In the case where 16 QAM is used on a given channel, there are 16 modulation states in the constellation, and hence each possible value of a 4-bit word can be mapped to a given modulation state, or, equivalently, to a given point on the constellation. In a transmission system where a single channel is employed, the information (i.e., the word) carried in the channel when the channel is in a given modulation state (for the duration of the symbol period) is known itself as a symbol. In the present DSL example, however, many channels are employed, and each channel will be modulated during a given symbol period according to one of the states of its respective constellation. In such a situation, a symbol refers to the sum of the information contained in the different channels during a symbol period.

Returning to figure 1, the central station 12 has an input 18 for receiving a stream of user data, which is divided into blocks by a block manager 20. An overhead manager 22 is arranged to associate overhead information with each block, so as to form a sequence of frames 24 each frame having an overhead portion 26 and a payload portion 28. Normally, the payload portion is simply formed by a block of user data, in which case the overhead portion includes a serial number for the payload portion. A transmission manager 30 is provided to perform the necessary modulation and other signal processing to allow the information contained in the frames to be efficiently transmitted downstream (i.e. away from the central station) over the twisted pairs.

In a similar fashion, the remote station also has a block manager 32, an overhead manager 34 and a transmission manager 36 for transmitting upstream frames towards the central station. In addition, the remote station has a queue manager 46 for managing a queue of user data blocks received from the central station, for forwarding to the relevant user(s). Although the transmission manager 36 functions in some respects in a similar way to that of the central station, the communication system 10 is arranged such that far greater bandwidth is available for downstream traffic than is available for upstream traffic.

The central and remote stations each have a respective timing manager 38, 40, each for controlling the timing of frame transmissions. Each of the timing managers has an associated clock unit 42, 44 which determines the rate at which frames are transmitted, one frame being transmitted per clock cycle from each of the central and remote stations.

The clock units are synchronised according to a master and slave relationship, the clock unit at the central station acting as a master to the clock unit at the remote station. Thus, the communication system is a synchronous system, the central station and the remote station each transmitting a stream of frames at a common clock rate.

The remote station has a loss detection stage 42, for detecting whether a received block has been subjected to loss. In order for loss to be detectable, the overhead manager 22 of the central station introduces a checksum into the overhead portion of each frame carrying user data, the checksum having being calculated according to an algorithm known to the loss detection stage. The central station includes a store 44 for storing copies of transmitted blocks (in association with their serial numbers) so that if loss in a block is detected by the remote station, that block can be re-transmitted by the central station. In order to inform the central station of when a block needs to be re-transmitted, the transmission manager of the remote station is arranged to transmit an acknowledgement message in respect of each block of user data, the acknowledgement message being indicative of whether loss has been determined. After a predetermined delay set by the response time of the remote station, each generated ack message is placed in the next upstream frame to be transmitted by the remote station.

Importantly, the acknowledgement in respect of a given downstream frame consists of a single bit or other two state indicators introduced into an upstream frame at a predetermined position, which position is known by the central station so that the one-bit acknowledgement message can be identified within a frame.

As the acknowledgement message has only two states, it does not itself contain information indicative of the block to which it relates. However, there will be an upstream frame transmitted by the remote station for each downstream frame transmitted by the central station, since frames are transmitted by the central station and the remote station at the same rate. That is, a 1:1 correspondence can be implied between each upstream frame and a downstream frame even in the absence of any information carried in the upstream frames associating a given upstream frame with a downstream frame. Consequently, using a knowledge of the round-trip-time to and from the central station, the transmission manager of the central station is able to ascertain which frame in the upstream direction is sent immediately after a given downstream frame has been received at the remote station (taking into account the known response time of the remote station), and hence infer which downstream frame a given acknowledgement relates to.

This can be done in different ways. For example, the transmission manager of the central station can keep a record of the time at which each downstream frame was sent in association with its serial number. When an upstream frame containing an acknowledgement is received, the transmission manager can subtract the round trip time from the time at which the frame containing the acknowledgment was received in order to provide the transmission time and hence the identity of the corresponding downstream frame. However, as this method may be processor-intensive, it is preferred to provide a counter 43 at the central station which is incremented each time an upstream frame is received. If ack messages are sent be the remote station in the order in which the corresponding downstream frames are transmitted, the incremented counter value each time an ack is received provides an indication of the serial number of the corresponding frame, since the counter value will simply be offset from the counter value by a constant. The offset can be determined on the basis of a round trip time measurement, for example performed during the initialisation phase. In each of the aforementioned methods, the precise arrival time of an ack message does not need to be known: only the temporal position of a frame in the incoming stream need be known, either by a direct temporal measurement or indirectly by counting the number of previously received frames.

The above description relates to a simplified communication system. In a preferred system, the overhead manager of each of the central and remote stations is arranged to fill the payload of some of the frames (1 in every 69 frames in the patent example) with synchronisation information, to assist in the maintenance of synchronisation (and for other purposes also). In the preferred system, such frames, referred to as synchronisation frames or overhead frames, do not require ack and do not carry ack messages. In order to accommodate the presence of such messages, the transmission manager of the central station is arranged to ignore such frames when incrementing a counter. In addition, when considering the round trip time, account must be taken of situations in which an upstream synchronisation frame is transmitted immediately after a downstream frame is received at the remote station.

If a positive acknowledgement is received in respect of a given downstream frame indicating that that frame has been correctly received, then no additional action is taken by the transmission manager of the central station. Otherwise the message in respect of a given downstream frame is either a negative acknowledgement message or the message is unreadable because the symbol carrying it has been lost. If the message is not readable as positive acknowledgement the transmission manager of the central station is arranged to re-transmit a copy of the data block previously carried in that frame. The copy is transmitted as a new frame, with fresh overhead information.

In the present example each data block is treated as an indivisible unit for re-transmission; that is, a data block is either transmitted in whole or not at all. This is particularly efficient because, neglecting the overhead bits, the size of a data block corresponds to a symbol, and symbols are normally either transmitted perfectly or are completely lost when subjected to impulsive noise such as Repetitive Electrical Impulse Noise (REIN). However, in some DSL systems, such as those operating according to the Integrated Services Digital Network (ISDN) standard, each data block is much smaller than a symbol, in which case the unit of re-transmission, (i.e., the smallest quantity of data that can be re-transmitted) will be several data blocks.

In another embodiment, the re-transmission unit is less than one data block, such that each data block has a re-transmissible portion, and a non-re-transmissible portion, such that when a negative acknowledgment is received in respect of a data block, only the re-transmissible portion is re-transmitted. This will allow for the possibility of two data streams, each with a different service need. For example, a low data rate stream may be provided which is intolerant of delay, and a high rate stream may be provided which is intolerant of error. The stream which is intolerant of errors can then be carried in the re-transmissible portion of the blocks, whereas the stream which cannot tolerate delay can be carried in the non-re-transmissible portion of a block. In a further alternative, each user data block may be divided into portions that are treated differently by the transmission manager of the central station. For example, different limits on the number of re-transmission attempts may be placed on the different portions.

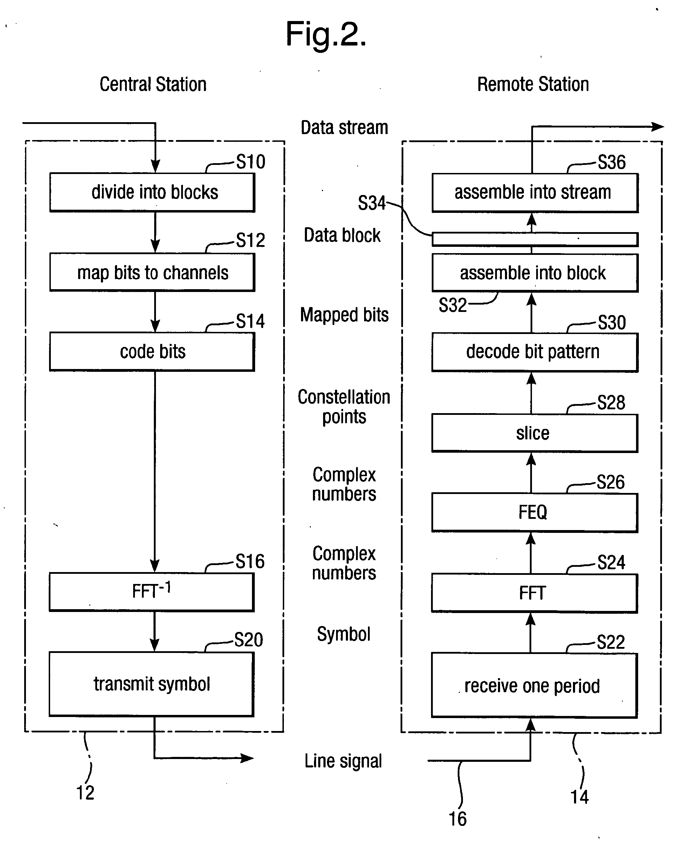

Figure 2 shows the steps involved in the transmission and receipt of data at central and remote stations respectively. At step S10, user data from the input 18 is divided into blocks, and overhead information including a serial number is introduced so as to create a respective frame for each block. At step S12, the bits in a given frame are distributed amongst the available channels in a mapping process; e.g., each channel is allocated one or more bits from the frame. As a result, each channel has a word mapped thereto. The word of a given channel is coded at step S14, that is, for each channel the word associated with that channel is mapped to one of the available modulation states or constellation points. The modulation state of a given channel can be represented by a complex number. The complex numbers for the respective channels are used at step S16 to produce a sinusoid wave form for each channel, and the sinusoids are summed. The formation and summing of the sinusoids is performed as a single parallel step using an inverse Fourier Transform process at step S16. The resulting symbol is transmitted as a line signal onto the optical link at step S20. This takes one symbol period of time.

At the remote station, the line signal during that one symbol period is received at step S22. The signal during that period is analysed using a fourier transform technique to obtain the phase and amplitude of each sinusoid as a complex number at step S24. At step S26, each complex number is multiplied by a complex constant to undo the phase shift and attenuation of the transmission medium (here, the twisted pair of the link). This is carried out using FDE (Frequency Domain Equalisation).

The modulation state of each channel is determined at step S28. This is done using a slicing process, that is, by comparing the complex number of a given channel obtained at S26 with the constellation for that channel, and assigning the nearest constellation point to the complex number as the modulation state for the channel. The modulation state is then interpreted as a bit pattern or word at step S30, and the words from the different channels are assembled into a block at step S32. A loss detection procedure is carried out at S34 to determine if the assembled block contains errors. If an error is detected, a negative acknowledgement message is generated, whereas if no loss is detected, a positive acknowledgement message is generated.

At step S36, the blocks are assembled into a stream for forwarding to one or more users. In order to assemble the blocks into a stream, the queue manager 46 of the remote station maintains a queue of received blocks, possibly with some blocks missing if blocks have been subject to error. The queue manager is arranged to output data from successive blocks at the end of the queue, but is arranged to wait if a block is missing. Thus, only blocks which have been deemed to be lost-free at the loss detection step S34 are placed in a queue. If a block is received more than once, only one copy is kept by the queue manager.

Similar steps in the upstream transmission are carried out, the roles of the central and remote stations being exchanged with respect to Figure 2. However, the ack message is recovered at step S12.

The various functional elements of the central station are implemented in hardware such as one or more processors running suitable software, the or each processors having access to a memory facility for storing data. The remote station will be implemented likewise.

## Claims

1. A method of communicating data between a central station that transmits downstream data units in a downstream direction and a remote station that transmits upstream data units in an upstream direction such that the upstream and downstream data units are transmitted in synchronism with one another, including the steps of:
(i) receiving at the central station an acknowledgement message residing in an upstream data unit, which acknowledgement message relates to a downstream data unit previously transmitted from the central station; and,
(ii) on the basis of the temporal position of the upstream data unit in which the acknowledgement message resides, making an inference as to which of the transmitted downstream data units the acknowledgement message relates.

2. A method as claimed in claim 1, wherein the acknowledgement message is formed as a two state indicator.

3. A method as claimed in claim 2, wherein the two state indicator is a single bit.

4. A method as claimed in any of the preceding claims, wherein the data units at least in the upstream direction are formed as frames having an overhead portion and a payload.

5. A method as claimed in claim 4, wherein the acknowledgement message is provided at the same position in each frame.

6. A method as claimed in any of the preceding claims, wherein the remote station is arranged to carry out a loss detection procedure in respect of a received data unit so as to determine whether the data unit has been subjected to loss, the acknowledgement message being indicative of whether such loss has been determined.

7. A method as claimed in any of the preceding claims, wherein the central station is arranged to re-transmit at least part of a previously transmitted data unit in dependence on the acknowledgement message relating to the previously sent data unit.

8. A method as claimed in any of the preceding claims, wherein each data units is transmitted by the central station in a modulated form represented by a symbol, which symbol has a modulation state and a duration associated therewith, the modulation state being constant throughout the duration of the symbol.

9. A method as claimed in any of the preceding claims when dependent on claim 4, wherein the central station is arranged to re-transmit data as re-transmission units whose size it equal to the size of the payload of a frame.

10. A method as claimed in any of the preceding claims when dependent on claim 4, wherein the payload has a re-transmissible portion and a non re-transmissible.
